(19) Europäisches Patentamt / European Patent Office / Office européen des brevets

(11) **EP 3 193 282 A1**

(12) **EUROPEAN PATENT APPLICATION**

(43) Date of publication:
**19.07.2017 Bulletin 2017/29**

(51) Int Cl.:
***G06K 19/077*** (2006.01)

(21) Application number: **16150859.3**

(22) Date of filing: **12.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **NXP B.V.**
**5656 AG Eindhoven (NL)**

(72) Inventors:
• **Rizkalla, Shrief**
**1040 Wien (AT)**

• **Mecklenbraeuker, Christoph Friedrich**
**1040 Wien (AT)**
• **Prestros, Ralph Christian Josef Oskar**
**Redhill, Surrey RH1 1SH (GB)**

(74) Representative: **Hardingham, Christopher Mark**
**NXP SEMICONDUCTORS**
**Intellectual Property Group**
**Abbey House**
**25 Clarendon Road**
**Redhill, Surrey RH1 1QZ (GB)**

(54) **PROXIMITY INTEGRATED CIRCUIT CARD AND METHOD**

(57) A proximity integrated circuit card and a method of manufacturing the same. The proximity integrated circuit card includes a card portion. The proximity integrated circuit card also includes an integrated circuit module comprising an integrated circuit and optionally also a module coil. The proximity integrated circuit card further includes a booster coil arrangement comprising one or more planar coils and an impedance matching network. The impedance matching network is operable to transfer power for providing a 3dB bandwidth at an input of the integrated circuit that is at least 47.1% of the 3dB bandwidth of the integrated circuit.

Fig. 1

**Description**

BACKGROUND

The present specification relates to a proximity integrated circuit card, to a method of making a proximity integrated circuit card and to a Radio Frequency Identification system comprising a card reader and at least one proximity integrated circuit card.

Radio Frequency Identification (RFID) technology has been the focus of many researches for the past years. This is motivated by its wide range of applications, such as biomedical sensors, healthcare, tracking of goods, documents and animals etc. There are several challenges for RFID development such as increasing the read range, enhancing the mechanical robustness, lowering the cost of production, increasing the data rate, and reducing their size.

A proximity integrated circuit card such as a Radio Frequency Identification card may typically include a spiral coil connected through a conductive wire (galvanic coupling) to a semiconductor device such as an integrated circuit.

SUMMARY

Aspects of the present disclosure are set out in the accompanying independent and dependent claims. Combinations of features from the dependent claims may be combined with features of the independent claims as appropriate and not merely as explicitly set out in the claims.

According to an aspect of the present disclosure, there is provided a proximity integrated circuit card comprising:

a card portion;
an integrated circuit module comprising a module coil and an integrated circuit; and
a booster coil arrangement comprising a first planar coil and a second planar coil, wherein the first planar coil is non-galvanically coupled to the module coil of the integrated circuit module and wherein the second planar coil is coupled to the first planar coil by an impedance matching network,
wherein the impedance matching network is operable to transfer power between the second planar coil and the first planar coil for providing a 3dB bandwidth at an input of the integrated circuit that is at least 47.1% of the 3dB bandwidth of the integrated circuit.

According to another aspect of the present disclosure there is provided a method of making a proximity integrated circuit card, the method comprising:

providing a card portion;
providing an integrated circuit module comprising a module coil an integrated circuit; and
providing a booster coil arrangement by:

non-galvanically coupling a first planar coil to the module coil the integrated circuit module;
coupling a second planar coil to the first planar coil with an impedance matching network; and
attaching the integrated circuit module and the booster coil arrangement to the card portion,

wherein the impedance matching network is operable to transfer power between the second planar coil and the first planar coil for providing a 3dB bandwidth at an input of the integrated circuit that is at least 47.1 % of the 3dB bandwidth of the integrated circuit.

The second planar coil may be considered to be a primary coil of the proximity integrated circuit card for the coupling between the booster coil arrangement and a coil of a proximity coupling device. The first planar coil may be considered to be a secondary planar coil of the proximity integrated circuit card, which may serve to efficiently couple the power received by the second planar coil to the integrated circuit module.

The provision of a booster coil arrangement may improve the transfer signals between the integrated circuit module of a proximity integrated circuit card (PICC) and a proximity coupling device (PCD) such as a card reader. By providing an impedance matching network between the first and second planar coils of the booster coil arrangement, the usable bandwidth of a system including the card and a proximity coupling device (which may be quantified in terms of the 3dB bandwidth of the integrated circuit of the card) may be improved. In accordance with embodiments of this disclosure, it has been determined that the 3dB bandwidth at an input of the integrated circuit may be at least 47.1% of the 3dB bandwidth of the integrated circuit.

For the purposes of this disclosure the "3dB bandwidth" may refer to a two-sided bandwidth given by the width of the peak in power transmission as a function of frequency at a point 3dB beneath the peak.

The booster coil arrangement may include a third planar coil. The third planar coil may be coupled to the second planar coil. This may enhance the power transfer by the booster coil arrangement. The third planar coil may be coupled to the second planar coil by a further impedance matching network. The further impedance matching network may be configured in the manner described above, e.g. it may include a plurality of passive components such as at least one capacitor and/or at least one resistor and/or at least one inductor and/or at least one memristor, which may be connected in parallel or in series with ports of the further impedance matching network.

In some embodiments, a matching order of the transfer function of the impedance matching network coupling together the first planar coil and the second planar coil may be at least 1.

According to a further aspect of the present disclosure there is provided a proximity integrated circuit card comprising:

> a card portion;
> an integrated circuit module comprising an integrated circuit; and
> a booster coil arrangement comprising a planar coil connected to an impedance matching network, wherein the impedance matching network is galvanically coupled to the integrated circuit of the integrated circuit module,
> wherein the impedance matching network is operable to transfer power between the planar coil and the integrated circuit module for providing a 3dB bandwidth at an input of the integrated circuit that is at least 47.1 % of the 3dB bandwidth of the integrated circuit.

According to another aspect of the present disclosure there is provided a method of making a proximity integrated circuit card, the method comprising:

> providing a card portion;
> providing an integrated circuit module comprising an integrated circuit; and
> providing a booster coil arrangement by:
>
>> coupling a planar coil to an impedance matching network; and
>> galvanically coupling impedance matching network to the integrated circuit of the integrated circuit module, and
>
> attaching the integrated circuit module and the booster coil arrangement to the card portion,
> wherein the impedance matching network is operable to transfer power between the planar coil and the integrated circuit module for providing a 3dB bandwidth at an input of the integrated circuit that is at least 47.1 % of the 3dB bandwidth of the integrated circuit.

Accordingly, it is envisaged that the impedance matching network of the booster coil arrangement may be coupled galvanically to the integrated circuit of the integrated circuit module. In these examples, the integrated circuit module need not include a module coil, and the booster coil arrangement need not include another planar coil for non-galvanic coupling to such a module coil. In such examples, planar coil may provide for the coupling between the booster coil arrangement and a coil of a proximity coupling device. It is envisaged that in examples of this kind, the impedance matching network may provide similar functionality to that noted above, for improving the transfer signals between the integrated circuit module of a proximity integrated circuit card (PICC) and a proximity coupling device (PCD) such as a card reader. In particular, the use of the impedance matching network may improve the usable bandwidth of the system.

In some embodiments, a matching order of the transfer function of the impedance matching network coupling together the planar coil and the integrated circuit of the integrated circuit module may be at least 1.

The impedance matching network (e.g. of either the non-galvanically coupled or galvanically coupled examples described above) may include a plurality of passive components. These components may include, for instance, at least one capacitor and/or at least one resistor and/or at least one inductor and/or at least one memristor. The provision of a plurality of such components can allow the bandwidth of the impedance matching network to be increased. The components themselves may be connected in parallel or in series with the inputs and outputs of the impedance matching network. The choice of components included in the impedance matching network and the way that they are arranged may allow the bandwidth of the impedance matching network to be tailored to (e.g. to match or exceed) the bandwidth of the integrated circuit, to an operating frequency of the system and/or to a specific application.

The card portion may have a laminated construction. For instance, the card portion may include a first layer (in which the first planar coil may optionally be located) and a second layer (in which the second planar coil may optionally be located). In examples in which the impedance matching network includes at least one capacitor, a first plate of the at least one capacitor may be provided in the first layer and a second plate of the at least one capacitor may be provided in the second layer. In other examples, the plates of the at least one capacitor may both be located in the same layer.

The impedance matching network may comprise two ports. A first port may be connected to a planar coil of the booster coil arrangement. A second port may be coupled either to the integrated circuit of the integrated circuit module (e.g. in the case of a card having galvanically coupled integrated circuit) or to another planar coil of the booster coil arrangement (e.g. in the case of a card having a booster coil arrangement having another coil that is non-galvanically coupled integrated circuit).

The components of the impedance matching network may be connected to these ports. Each port may include a line that is connected to ground and a line that is connected to an end of one of the planar coils. In some examples, a further line may be connected to either the first planar coil or the second planar coil by a tap.

The use of a galvanic coupling to the integrated circuit as described above is thought to jeopardise the long term robustness of proximity integrated circuit cards. Accordingly, embodiments of this disclosure may find particular application in proximity integrated circuit cards using non-galvanic coupling between the first planar coil and a module coil, which may enable the proximity integrated circuit card to retain the performance limits of a typical proximity integrated circuit card using galvanic coupling.

According to a further aspect of the present disclosure, there is provided a Radio Frequency Identification system comprising:

> a proximity coupling device; and
> at least one proximity integrated circuit card of the kind described above.

The system may comply with ISO 10373-6. The system may comply with ISO 14443-2.

The system may operate at radio frequency (RF) frequencies. For instance, a typical frequency of the carrier waves used to transmit data between the proximity coupling device (e.g. card reader) and the proximity integrated circuit card may be 13.56 MHz, although it is envisaged that other frequencies may also be used.

In one embodiment, compliant with ISO 10373-6 and ISO 14443-2, the impedance matching network may have a bandwidth of at least 14% of the carrier frequency (13.56 MHz). The proximity integrated circuit card may operate at a data rate of at least 106 Kbit/sec.

The 3dB bandwidth of an integrated circuit of the kind described herein may, for instance, be at least 1.2 MHz (higher bandwidths are envisaged).

BRIEF DESCRIPTION OF THE DRAWINGS

Embodiments of this disclosure will be described hereinafter, by way of example only, with reference to the accompanying drawings in which like reference signs relate to like elements and in which:

> Figure 1 shows a system comprising a proximity coupling device and a proximity integrated circuit card in accordance with an embodiment of this disclosure;
> Figure 2 shows a system comprising a proximity coupling device and a proximity integrated circuit card in accordance with another embodiment of this disclosure;
> Figure 3 shows a system comprising a proximity coupling device and a proximity integrated circuit card in accordance with another embodiment of this disclosure;
> Figures 4A to 4F each show an example of an impedance matching network in accordance with an embodiment of this disclosure; and
> Figure 5A and 5B each show a system comprising a proximity coupling device and a proximity integrated circuit card in accordance with a further embodiment of this disclosure.

DETAILED DESCRIPTION

Embodiments of this disclosure are described in the following with reference to the accompanying drawings.

Embodiments of this disclosure may provide a proximity integrated circuit card (PICC) which may be used in a system such as a Radio Frequency Identification system including also a proximity coupling device (PCD) such as a card reader. The proximity integrated circuit card and the proximity coupling device may each include one or more coils for sending and receiving data between them using electromagnetic radio frequency (RF) signals. For instance, in some embodiments, the signals passed between the proximity integrated circuit card and the proximity coupling device may have a frequency of 13.56MHz, which is a known frequency for use in high frequency (HF) Radio Frequency Identification (RFID) systems. The system may comply with ISO 10373-6 and may comply with ISO 14443-2.

In accordance with embodiments of this disclosure, an impedance matching network may be incorporated into a proximity integrated circuit card. In some examples, the card may include a booster coil arrangement having at least two planar coils, where one of the coils couples to a coil of a proximity coupling device to receive a signal, and where the other planar coil couples the signal non-galvanically (e.g. inductively) to a module coil of an integrated circuit module of the card. In such examples, the impedance matching network may be provided between the two planar coils of the card. In other examples, the booster coil arrangement may include an impedance matching network that is galvanically coupled (typically with a wire) to the integrated circuit module. A planar coil of the booster coil arrangement may be coupled to the impedance matching network, efficiently to couple a signal received by the planar coil from the coil of a proximity coupling device to the integrated circuit.

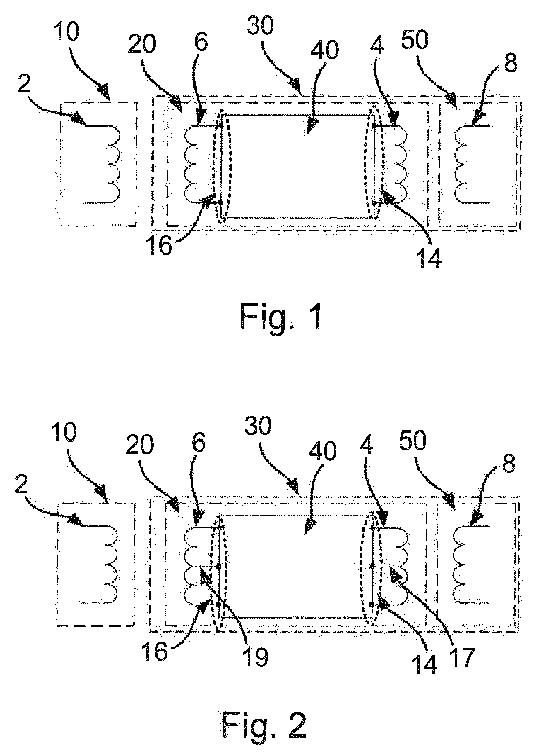

Figure 1 shows an example of a system according to an embodiment of this disclosure. The system includes a proximity coupling device (PCD) 10 and a proximity integrated circuit card (PICC) 30.

The proximity coupling device 10 may, for instance be a card reader used in a security system or in commerce. The proximity coupling device 10 includes a coil 2 for transmitting and receiving signals to and from the proximity integrated circuit card 30. It is envisaged that the proximity coupling device 10 may for instance be a conventional card reader and accordingly its construction will not be described herein in detail.

The proximity integrated circuit card 30 includes a card portion, an integrated circuit module 50 and a booster coil arrangement 20.

The card portion may comprise a substantially flat plastic card (such as a credit card or identification card) upon which, or within with the other components of the proximity integrated circuit card 30, such as the integrated circuit module 50 and booster coil arrangement 20 may be mounted.

The integrated circuit module 50 includes an integrated circuit which may be conventional and which will therefore not be described herein in detail. The integrated circuit may store data specific to the particular application in which the card is to be used. For instance, where the card is a credit card, the integrated circuit may store bank account details of a user of the card. Other envisaged applications include biomedical sensors, healthcare, tracking of goods, documents, animals... etc. In this example, the integrated circuit module 50 also includes a module coil 8 which may couple inductively to a first planar coil 4 of the booster coil arrangement 20, thereby non-galvanically to couple the booster coil arrangement 20 to the integrated circuit module 50.

In this example, the booster coil arrangement 20 includes a first planar coil 4 and a second planar coil 6. Each coil 4, 6 may be arranged as a planar spiral coil mounted on or in the card portion. When viewed along an axis of each planer coil (about which the turns of the coils are wound), the planar coil 4, 6 may be, for instance rectangular (e.g. oblong) or substantially circular. The first coil 4 may be located inside the loop formed by the second planar coil 6 when viewed along the coil axis. The second planar coil 6 may have turns that enclose a larger area than the turns of the first planar coil 4 (e.g. the diameter of the turns of the second planar coil 6 may be larger than the turns of the first planar coil 4).

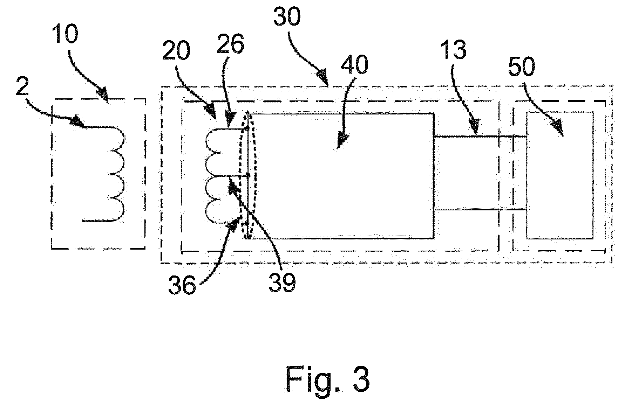

The integrated circuit module 50 may itself be physically located at a position inside the turns of the first planar coil 4. While in this example booster coil arrangement 20 is non-galvanically coupled to the integrated circuit module 50 by inductive coupling between the first planar coil 4 and the module coil 8, in other examples (e.g. see Figure 3 below) the coupling between the booster coil arrangement 20 and the integrated circuit module 50 may be galvanic.

The card portion may have a laminated construction. For instance, the card portion may include a first layer in which the first planar coil 4 is located and a second layer in which the second planar coil 6 is located. Connections between the planar coils 4, 6 (e.g. between the ports of the impendence matching network to be described below) may extend between the layers in which the planar coils 4, 6 are provided. In other examples, the planar coils 4, 6 may be located in the same layer.

The first planar coil 4 in this example is non-galvanically coupled to the integrated circuit module 50. To implement this, the integrated circuit module 50 is provided with a module coil 8. The module coil 8 itself may be directly (galvanically) coupled to the integrated circuit of the integrated circuit module 50. The first planar coil 4 of the booster coil arrangement 20 may couple inductively with the module coil 8, whereby there need not be any direct physical contact between the booster coil arrangement 20 and the integrated circuit module 50.

During operation of the system, the second planar coil 6 couples with the coil 2 of the proximity coupling device 10 thereby to allow data to pass between the proximity coupling device 10 and the proximity integrated circuit card 30. The power associated with this signal may be transferred between the second planar coil 6 and the first planar coil 4 via an impedance matching network 40. The impedance matching network 40 may allow matching of the proximity integrated circuit card 30, particularly bearing in mind that the system including the card may operate at relatively high (RF) frequencies, such as at 13.56MHz. This may allow the useful bandwidth of the system to be enhanced. This enhancement may be particularly welcome in proximity integrated circuit cards in which the coupling between the booster coil arrangement 20 and the integrated circuit module 50 is non-galvanic (non-galvanic coupling may be an inherently weaker coupling than a direct physical connection using a wire).

The impedance matching network 40 may include a number of ports. In the example of Figure 1, the impedance matching network 40 includes a port 16, which is connected to the second planar coil 6 and a port 14, which is connected the first planar coil 4. Each port 14, 16 may include a plurality of lines, each of which may be connected to an end of one of the planar coils and/or to ground.

It is also envisaged that the impedance matching network 40 may include one or more lines connected to the first planar coil 4 and to the second planar coil 6 using tap connections. By way of example, Figure 2 shows a system that is similar to that shown in Figure 1, except that the impedance matching network 40 includes a tap connection 17 which is connected to the first planar coil 4, and a tap connection 19, which is connected to the second planar coil 6.

The impedance matching network 40 may include a plurality of passive components. The passive components may include at least one capacitor and/or at least one inductor and/or at least one resistor and/or at least one memristor. These components may be connected to the ports of the impedance matching network 40 and/or to tap connections of the kind described above.

In examples including passive components such as those noted above, these components may be located in one or more separate layers of the card portion. For instance, the passive components may be located in one or more layers intervening the layer containing the first planar coil 4 and the layer containing the second planar coil 6. It is also envisaged that the components may be formed in the layers that contain the planar coils 4, 6. In the case of passive components comprising capacitors, to save space, the plates of each capacitor may be each located is a respective layer of the card portion. For example, a first plate of each capacitor may be located in the layer of the card portion containing the first planar coil 4 and the second plate of each capacitor may be located in the layer of the card portion containing the second planar coil 6.

The provision of a plurality of passive components in an impedance matching network 40 between the first 4 and second planar coils 6 of the booster coil arrangement 20 can allow the useful bandwidth of the system to be enhanced due to better matching of the proximity integrated circuit card 30. It is envisaged that an impedance matching network according to embodiments of this disclosure should be operable to transfer power between the second planar coil 6 and the first planar coil 4 so as to provide a 3dB bandwidth at an input of the integrated circuit that is at least 47.1% of the 3dB bandwidth of the integrated circuit. This increase in the useful bandwidth can improve data rates and/or reduce error rates in signals passing between the proximity coupling device 10 and the proximity integrated circuit card 30.

The choice of components included in the impedance matching network and the way that they are connected may allow considerable design freedom for allowing the bandwidth of the impedance matching network to be tailored to the bandwidth of the integrated circuit, to an operating frequency of the system and/or to a specific application.

Regarding the % bandwidth figures set out in the present disclosure, a simplified equation for the calculation of the quality factor - bandwidth product is provided in A. R. Lopez, "Review of Narrowband Impedance-Matching Limitations," IEEE Antennas and Propagations Magazine, vol. 46, pp. 88-90, Aug. 2004. Using this equation, the percentage (denoted below as "$B_n$") of the 3dB bandwidth at the input of the integrated circuit with respect to the 3dB bandwidth of the integrated circuit may be expressed as:

$$B_n = \frac{1}{b_n \sinh\left[\frac{1}{a_n}\ln\left(\frac{1}{\rho}\right)\right] + \frac{1-b_n}{a_n}\ln\left(\frac{1}{\rho}\right)} \times 100\%$$

Here, the constants $a_n$ and $b_n$ are calculated by R. M. Fano, "Theoretical Limitations on the Broadband Matching of Arbitrary Impedances," Journal of the Franklin Institute, vol. 249, January 1950 and enhanced by Lopez, n is the order of the matching network and p is the reflection coefficient of the proximity integrated circuit card.

Table 1 shows examples values for the constants $a_n$ and $b_n$, with respect to the order of the matching network n.

Table 1: The constants $a_n$ and $b_n$.

| n | $a_n$ | $b_n$ |
|---|---|---|
| 1 | 2 | 1 |
| 2 | 2.413 | 0.678 |
| 3 | 2.628 | 0.474 |
| $\infty$ | $\pi$ | 0 |

As the magnitude of the reflection coefficient (dB) ($|\rho|$) increases, the percentage of bandwidth $B_n$ decreases. Therefore, choosing a high (dB) ($|\rho|$) provides a lower bound on the bandwidth (this lower bound may be defined to be 47.1 % for the purposes of this disclosure). For the purposes of this disclosure (and in particular the 47.1 % figure referred to herein), the magnitude of a reflection coefficient of 26 dB or lower may be assumed (note that in systems compliant with ISO 10373-6 and ISO 14443-2, this value may provide an equivalent bandwidth of 4.4% of the carrier frequency (13.56MHz) achieved using an integrated circuit with 69pF capacitance). It is noted that current systems may typically have $|\rho| > 0.05$ (i.e. rather less than 26 dB), and so in principle $B_n$ may be rather higher than 47.1 % in practice.

Figure 3 shows another example of a system according to an embodiment of this disclosure. The system includes a proximity coupling device (PCD) 10 and a proximity integrated circuit card (PICC) 30.

As noted previously in respect of Figures 1 and 2, the proximity coupling device 10 may, for instance be a card reader used in a security system or in commerce. The proximity coupling device 10 includes a coil 2 for transmitting and receiving signals to and from the proximity integrated circuit card 30.

As with the examples of Figures 1 and 2, the proximity integrated circuit card 30 includes a card portion, an integrated circuit module 50 and a booster coil arrangement 20. In this example however, the booster coil arrangement 20 is galvanically coupled to the integrated circuit module 50.

As with the examples of Figures 1 and 2, the card portion may comprise a substantially flat plastic card (such as a credit card or identification card) upon which, or within with the other components of the proximity integrated circuit card 30, such as the integrated circuit module 50 and booster coil arrangement 20 may be mounted.

In this example, the integrated circuit module 50 includes an integrated circuit, which again may be conventional and which will therefore not be described herein in detail. As explained previously, the integrated circuit may store data specific to the particular application in which the card is to be used. For instance, where the card is a credit card, the integrated circuit may store bank account details of a user of the card. Other envisaged applications include biomedical sensors, healthcare, tracking of goods, documents, animals... etc.

In this example, the booster coil arrangement 20 includes a planar coil 26, which is coupled to an impedance matching network 40. As with the examples of Figures 1 and 2, the planar coil 26 may be arranged as a planar spiral coil mounted on or in the card portion and may e.g. be rectangular (e.g. oblong) or substantially circular. The integrated circuit module 50 may itself be physically located at a position inside the turns of the planar coil 26.

To implement the coupling between the planar coil 26 and the impedance matching network 40, the impedance matching network 40 may include a port 36 of the kind described above in relation to Figures 1 and 2 and may optionally also one or more tap connections 39 of the kind described above. The impedance matching network 40 may include a plurality of passive components such as at least one capacitor and/or at least one inductor and/or at least one resistor and/or at least one memristor. As explained previously, these components may be connected to the port 36 of the impedance matching network 40 and/or to the optional tap connection(s) 39. The impedance matching network 40 in this example is coupled galvanically to the integrated circuit of the integrated circuit module 50 e.g. using one or more wires 13. The wires 13 may be electrically connected (e.g. soldered) to inputs of the integrated circuit.

During operation of the system, the planar coil 26 couples with the coil 2 of the proximity coupling device 10 thereby to allow data to pass between the proximity coupling device 10 and the proximity integrated circuit card 30. The power associated with this signal may be transferred to the integrated circuit of the integrated circuit module 50 via the impedance matching network 40 and the wires 13. As noted above, the impedance matching network 40 may allow matching of the proximity integrated circuit card 30, particularly bearing in mind that the system including the card may operate at relatively high (RF) frequencies, such as at 13.56MHz. This may allow the useful bandwidth of the system to be enhanced.

The choice of components included in the impedance matching network and the way that they are connected may allow considerable design freedom for allowing the bandwidth of the impedance matching network to be tailored to the bandwidth of the integrated circuit, to an operating frequency of the system and/or to a specific application. In some examples, the booster coil arrangement 20 may include a planar coil connected either in series with a wire 13 connecting the impedance matching network 40 to the integrated circuit module 50, or in parallel between two wires 13 connecting the impedance matching network 40 to the integrated circuit module 50. Such a planar coil, which may be considered to be part of the impedance matching network 40 itself, may be configured (e.g. in terms of shape, size and location) similarly to the other planar coils described herein.

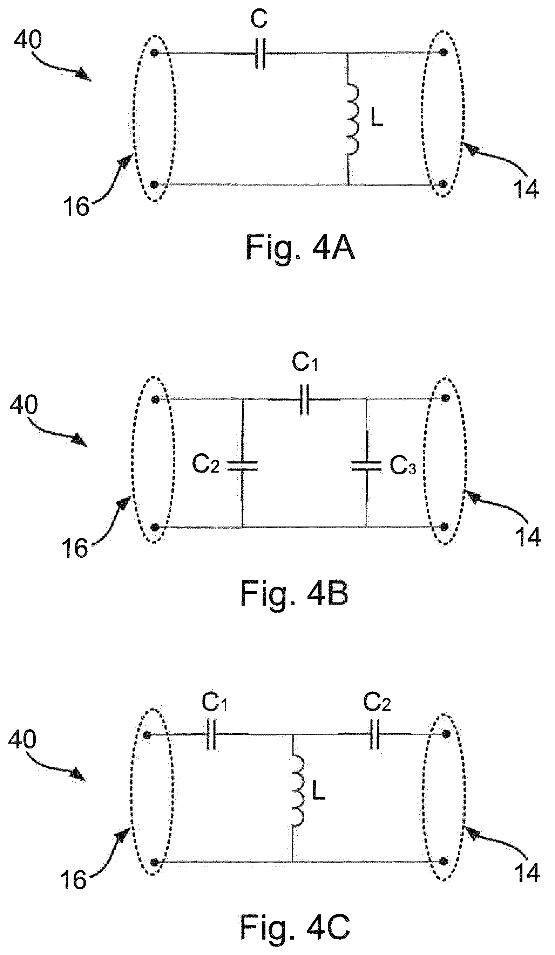

Figures 4A to 4F each show an example of an impedance matching network 40 that may be used in a booster coil arrangement of a proximity integrated circuit card in accordance with embodiments of the present disclosure. Each of the impedance matching networks 40 in the examples of Figures 4A to 4F includes at least two passive components including one or more capacitors, inductors, resistors or memristors.

Each of the impedance matching networks 40 in the examples of Figures 4A to 4F includes a port 16 connected to a planar coil (e.g. the second planar coil 6 shown in Figures 1 and 2 or the planar coil 26 shown in Figure 3) of the booster coil arrangement 20 as described previously. Each of the impedance matching networks 40 in the examples of Figures 4A to 4F also includes a port 14. The port 14 may be connected to a first planar coil 4 of the booster coil arrangement 20 as described previously in relation to Figures 1 and 2. Alternatively, the port 14 may be coupled galvanically to the integrated circuit of an integrated circuit module using wires 13 of the kind described above in relation to Figure 3. The plurality of passive components of the impedance matching network 40 in these examples are connected to the ports 14, 16 e.g. either in series or in parallel. It will be appreciated that tap connections 17, 19 such as those described in relation to Figures 2 and 3 may also be provided, and that one or more components of the impedance matching network 40 may be connected to those connections also.

The impedance matching network 40 in Figure 4A includes a capacitor C and an inductor L. The capacitor C is connected in series between the port 16 and the port 14. The impedance matching network 40 in Figure 4A also includes an inductor L. The inductor L is connected in parallel between the lines of the impedance matching network 40 connected between the port 14 and the port 16. The inductor L is, in this example, located on a side of capacitor C that is located closest to the port 14.

The impedance matching network 40 in Figure 4B includes a first capacitor $C_1$, a second capacitor $C_2$ and a third capacitor $C_3$. The first capacitor $C_1$ is connected in series between the port 16 and the port 14. The two capacitors $C_2$ and $C_3$ are both connected in parallel between the lines of the impedance matching network 40 connected between the port 14 and the port 16. Note that the two capacitors $C_2$ and $C_3$ are both connected in parallel with each other. Capacitor $C_2$ is, in this example, located on a side of capacitor $C_1$ that is located closest to the port 16, while the Capacitor $C_3$ is, in this example, located on a side of capacitor $C_1$ that is located closest to the port 14.

The impedance matching network 40 in Figure 4C includes two capacitors $C_1$, $C_2$ and an inductor L. Both capacitors $C_1$, $C_2$ are connected in series between the port 16 and the port 14. Note that the two capacitors $C_1$, $C_2$ are also connected in series with each other. The inductor L is connected in parallel between the lines of the impedance matching network 40 connected between the port 14 and the port 16. In this example, one of the terminals of the inductor L is located in between the two series connected capacitors $C_1$, $C_2$.

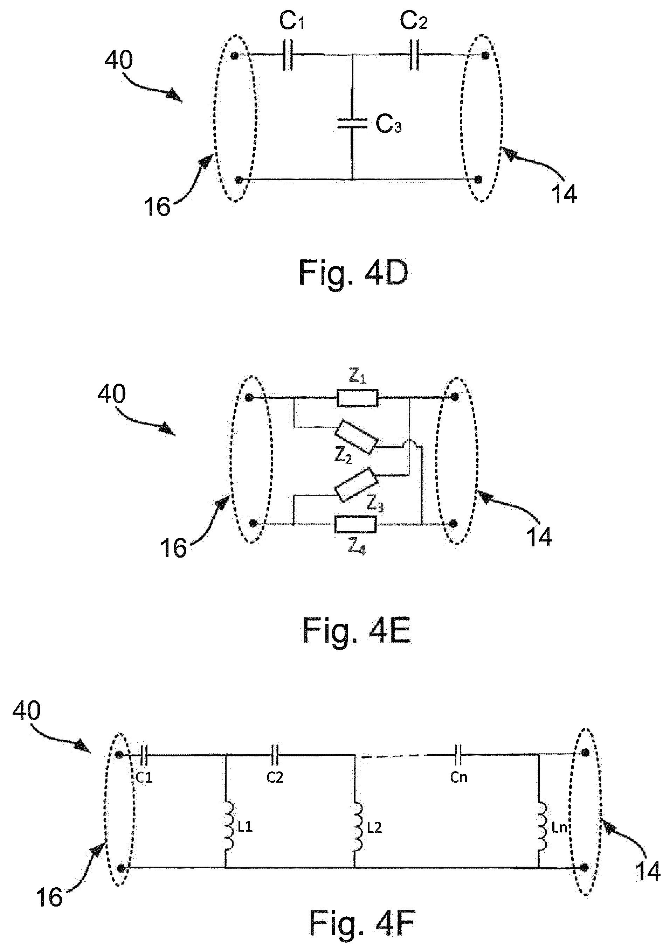

The impedance matching network 40 in Figure 4D includes three capacitors $C_1$, $C_2$, $C_3$. Two capacitors $C_1$, $C_2$ are connected in series between the port 16 and the port 14. Note that the two capacitors $C_1$, $C_2$ are also connected in series with each other. The capacitor $C_3$ is connected in parallel between the lines of the impedance matching network 40 connected between the port 14 and the port 16. In this example, one of the terminals of the capacitor $C_3$ is located in between the two series connected capacitors $C_1$, $C_2$.

The impedance matching network in Figure 4E includes four impedances $Z_1$, $Z_2$, $Z_3$, $Z_4$. Each impedance may, for instance, comprise a resistor, capacitor, inductor or memristor. The impedance $Z_1$ is connected in series between the port 16 and the port 14 on a first line of the impedance matching network 40. The impedance $Z_4$ is connected in series between the port 16 and the port 14 on a second line of the impedance matching network 40. The two impedances $Z_2$ and $Z_3$ are both connected in parallel between the lines of the impedance matching network 40 connected between the port 14 and the port 16. Note that the two impedances $Z_2$, $Z_3$ may also be considered to be connected in parallel with each other. One terminal the impedance $Z_2$ is connected to a node located between the impedance $Z_1$ and the port 16 to which the impedance $Z_1$ is connected. The other terminal of the impedance $Z_2$ is connected to a node located between the impedance $Z_4$ and the port 14 to which the impedance $Z_4$ is connected. One terminal of the impedance $Z_3$ is connected to a node located between the impedance $Z_1$ and the port 14 to which the impedance $Z_1$ is connected. The other terminal of the impedance $Z_3$ is connected to a node located between the impedance $Z_4$ and the port 16 to which the impedance $Z_4$ is connected.

The impedance matching network in Figure 4F includes n capacitors $C_1$, $C_2$......$C_n$ and n inductors $L_1$, $L_2$......$L_n$. Each capacitor $C_1$, $C_2$......$C_n$ is connected in series on a line between the port 14 and the port 16. Each capacitor is connected in parallel between the lines of the impedance matching network 40 connected between the port 14 and the port 16. Note that the capacitors $C_1$, $C_2$... ...$C_n$ are also connected in series with each other, and that the inductors $L_1$, $L_2$... ...$L_n$ are also connected in parallel with each other. Note that the inductors $L_1$, $L_2$... ...$L_n$ and capacitors $C_1$, $C_2$... ...$C_n$ in Figure 4F may be interchanged, so that the inductors are instead connected in series between the ports 14, 16 and the capacitors are instead connected in parallel between the lines of the impedance matching network 40 connected between the port 14 and the port 16. The number may be chosen in accordance with design requirements (although n should generally not be equal to the matching order of the impedance matching network 40).

It is envisaged that one or more the example circuits described above in relation to Figures 4A to 4F may be combined together in a single impedance matching network 40. For instance, the impedance matching network 40 may include multiple stages, each stage comprising a circuit of the kind described above in relation to Figures 4A to 4F.

Each of the example impedance matching networks described above may allow power to be transferred between the planar coils of a booster coil arrangement of the kind described in relation to Figures 1 and 2 for providing a 3dB bandwidth at an input of the integrated circuit that is at least 47.1% of the 3dB bandwidth of the integrated circuit. Each of the example impedance matching networks described above may also allow power to be transferred between the planar coil and the integrated circuit module described above in relation to Figure 3 for providing a 3dB bandwidth at an input of the integrated circuit that is at least 47.1% of the 3dB bandwidth of the integrated circuit. For instance, the 3dB bandwidth provided by the impedance matching network in shown Figure 4C may be at least 67.8% of the 3dB bandwidth of the integrated circuit.

In some embodiments, the booster coil arrangement of the proximity integrated circuit card may include a further planar coil (or coils). The provision of further planar coil(s) may further enhance the coupling between the proximity integrated circuit card and the coil of a proximity coupling device (PCD). For instance, the further coil(s) may allow additional power to be collected by the booster coil arrangement and/or may allow for even more efficient coupling of the received power to the integrated circuit module.

Each further planar coil of the booster coil arrangement may be added in a daisy chained fashion. For instance, in relation to non-galvanically coupled examples of the kind described above in relation to Figures 1 and 2, a third planar coil may be connected to the second planar coil 6 of the booster coil arrangement 20, a fourth planar coil may be connected to the third planar coil and so on. Each additional planar coil may be provided in a respective layer of the card portion. It is also envisaged that further planar coil(s) may be coupled (e.g. daisy chained) to the planar coil 26 shown in Figure 3, for similar reasons.

It is envisaged that an additional impedance matching network may be used to interconnect each further coil that is provided. For instance, in the example noted above in relation to Figures 1 and 2, an additional impedance matching network may be used to connect the third planar coil to the second planar coil 6, and another impedance matching network may be used to connect the fourth planar coil to the third planar coil. Each additional impedance matching network may be configured as described above (e.g. in relation to Figures 4A to 4F).

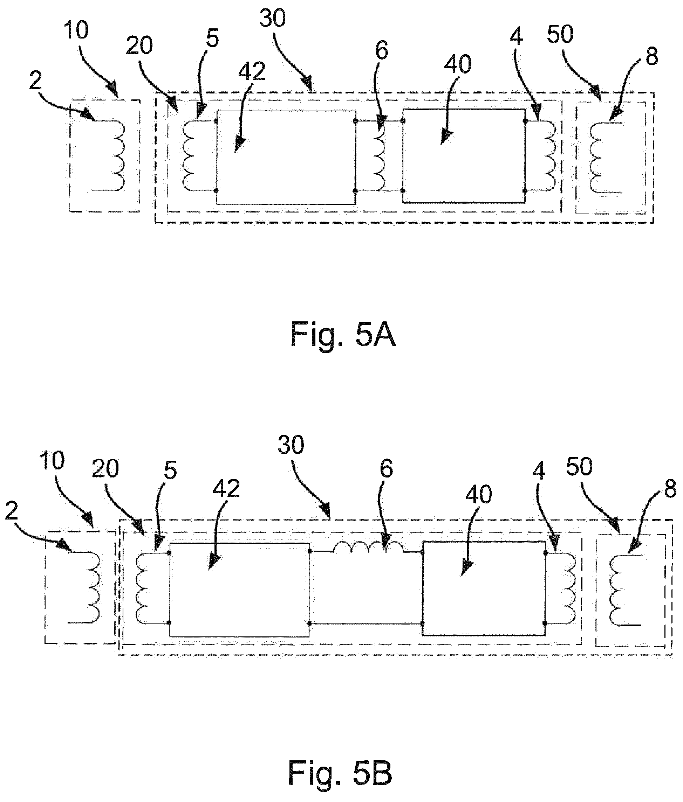

Figures 5A and 5B each shows an example of a system in accordance with an embodiment of this disclosure. The systems shown in Figures 5A and 5B are similar to those described in relation to Figures 1 and 2, except that, as noted above, the booster coil arrangement 20 is provided with a third planar coil 5. In both Figure 5A and Figure 5B, the third planar coil 5 is connected to the second planar coil 6 by an additional impedance matching network 42. The additional impedance matching network 42 may include a circuit of the kind described previously in relation to Figures 4A to 4F. As with Figures 1 and 2, the first planar coil 4 is non-galvanically connected to a module coil 8 of the integrated circuit module 50, although it is also envisaged that the impedance matching network 40 may be galvanically coupled to the integrated circuit module 50 as described in relation to Figure 3.

In each example, the second planar coil 6 is coupled to a port of the impedance matching network 42 and also to a port of the impedance matching network. In the particular example shown in th Figure 5A, the second planar coil 6 in Figure 5A is coupled in parallel between the ports of the impedance matching networks 40, 42. In an the alternative example shown in Figure 5B, the second planar coil 6 in Figure 5A is coupled in series between the ports of the impedance matching networks 40, 42.

An example of method of making a proximity integrated circuit card may include providing an integrated circuit module comprising an integrated circuit and a module coil as noted above. The method may also include providing a booster coil arrangement. This may include non-galvanically coupling a first planar coil to the module coil of the integrated circuit module and coupling a second planar coil to the first planar coil with an impedance matching network of the kind described above. The method may further include attaching the integrated circuit module and the booster coil arrangement to a card portion. It is noted that the order in which these steps may be performed is not necessarily the other in which they are recited here, and the ordering of at least some to the steps may be changed. For instance, it is envisaged that the booster coil arrangement may be assembled and attached to the card portion prior to the coupling of the first planar coil of the booster coil arrangement to the module coil of the integrated circuit module.

Another example of a method of making a proximity integrated circuit card may include providing an integrated circuit module comprising an integrated circuit as noted above. The method may also include providing a booster coil arrangement. This may include coupling a planar coil to an impedance matching network of the kind described above and galvanically coupling the impedance matching network to the integrated circuit of the integrated circuit module. The method may further include attaching the integrated circuit module and the booster coil arrangement to a card portion. It is noted that the order in which these steps may be performed is not necessarily the other in which they are recited here, and the ordering of at least some to the steps may be changed. For instance, it is envisaged that the booster coil arrangement may be assembled and attached to the card portion prior to the galvanic coupling of the impedance matching network of the booster coil arrangement to the integrated circuit of the integrated circuit module.

Accordingly, there has been described a proximity integrated circuit card and a method of manufacturing the same. The proximity integrated circuit card includes a card portion. The proximity integrated circuit card also includes an integrated circuit module comprising an integrated circuit and optionally also a module coil. The proximity integrated circuit card further includes a booster coil arrangement comprising one or more planar coils and an impedance matching network. The impedance matching network is operable to transfer power for providing a 3dB bandwidth at an input of the integrated circuit that is at least 47.1 % of the 3dB bandwidth of the integrated circuit.

Although particular embodiments of this disclosure have been described, it will be appreciated that many modifications/additions and/or substitutions may be made within the scope of the claims.

## Claims

1. A proximity integrated circuit card comprising:

   a card portion;
   an integrated circuit module comprising a module coil and an integrated circuit; and
   a booster coil arrangement comprising a first planar coil and a second planar coil, wherein the first planar coil is non-galvanically coupled to the module coil of the integrated circuit module and wherein the second planar coil is coupled to the first planar coil by an impedance matching network,
wherein the impedance matching network is operable to transfer power between the second planar coil and the first planar coil for providing a 3dB bandwidth at an input of the integrated circuit that is at least 47.1% of the 3dB bandwidth of the integrated circuit.

2. The proximity integrated circuit card of claim 1, wherein the booster coil arrangement comprises a third planar coil, wherein the third planar coil is coupled to the second planar coil.

3. The proximity integrated circuit card of claim 2, wherein the third planar coil is coupled to the second planar coil by a further impedance matching network.

4. The proximity integrated circuit card any preceding claim, wherein a matching order of the transfer function of the impedance matching network coupling together the first planar coil and the second planar coil is at least 1.

5. A proximity integrated circuit card comprising:

   a card portion;
   an integrated circuit module comprising an integrated circuit; and
   a booster coil arrangement comprising a planar coil connected to an impedance matching network, wherein the impedance matching network is galvanically coupled to the integrated circuit of the integrated circuit module, wherein the impedance matching network is operable to transfer power between the planar coil and the integrated circuit module for providing a 3dB bandwidth at an input of the integrated circuit that is at least 47.1% of the 3dB bandwidth of the integrated circuit.

6. The proximity integrated circuit card of claim 5, wherein a matching order of the transfer function of the impedance matching network coupling together the planar coil and the integrated circuit of the integrated circuit module is at least 1.

7. The proximity integrated circuit card of any preceding claim, wherein the impedance matching network comprises a plurality of passive components.

8. The proximity integrated circuit card of claim 7, wherein the plurality of passive components include at least one capacitor.

9. The proximity integrated circuit card of claim 8, wherein the card portion includes a first layer and a second layer, and wherein a first plate of the at least one capacitor is provided in the first layer and wherein a second plate of the at least one capacitor is provided in the second layer.

10. The proximity integrated circuit card of any of claims 7 to 9, wherein the plurality of passive components include at least one at least one inductor and/or at least one resistor and/or at least one memristor.

11. The proximity integrated circuit card of any preceding claim, wherein the impedance matching network is comprises:

    a first port connected to a planar coil of the booster coil arrangement; and
    a second port coupled either to the integrated circuit of the integrated circuit module or to another planar coil of the booster coil arrangement.

12. The proximity integrated circuit card of claim 11, wherein the impedance matching network further comprises at least one tap connection to a planar coil of the booster coil arrangement.

13. A Radio Frequency Identification system comprising:

    a proximity coupling device; and
    at least one proximity integrated circuit card according to any preceding claim.

14. A method of making a proximity integrated circuit card, the method comprising:

    providing a card portion;

providing an integrated circuit module comprising a module coil an integrated circuit; and
providing a booster coil arrangement by:

non-galvanically coupling a first planar coil to the module coil the integrated circuit module;
coupling a second planar coil to the first planar coil with an impedance matching network; and
attaching the integrated circuit module and the booster coil arrangement to the card portion,

wherein the impedance matching network is operable to transfer power between the second planar coil and the first planar coil for providing a 3dB bandwidth at an input of the integrated circuit that is at least 47.1% of the 3dB bandwidth of the integrated circuit.

15.  A method of making a proximity integrated circuit card, the method comprising:

providing a card portion;
providing an integrated circuit module comprising an integrated circuit; and
providing a booster coil arrangement by:

coupling a planar coil to an impedance matching network; and
galvanically coupling the impedance matching network to the integrated circuit of the integrated circuit module, and

attaching the integrated circuit module and the booster coil arrangement to the card portion,
wherein the impedance matching network is operable to transfer power between the planar coil and the integrated circuit module for providing a 3dB bandwidth at an input of the integrated circuit that is at least 47.1% of the 3dB bandwidth of the integrated circuit.

Fig. 1

Fig. 2

Fig. 3

Fig. 4A

Fig. 4B

Fig. 4C

Fig. 4D

Fig. 4E

Fig. 4F

Fig. 5A

Fig. 5B

Europäisches
Patentamt

European
Patent Office

Office européen
des brevets

**EUROPEAN SEARCH REPORT**

Application Number

EP 16 15 0859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 031 939 A1 (TOPPAN PRINTING CO LTD [JP]) 30 August 2000 (2000-08-30) * figures 2,3 * * paragraphs [0039] - [0066] * ----- | 1-4,7-14 | INV. G06K19/077 |
| X | US 2015/257266 A1 (MURAYAMA HIROMI [JP] ET AL) 10 September 2015 (2015-09-10) * figures 3,4 * * paragraphs [0059], [0060] * ----- | 5-13,15 | |

TECHNICAL FIELDS
SEARCHED (IPC)

G06K

The present search report has been drawn up for all claims

| Place of search | Date of completion of the search | Examiner |
|---|---|---|
| Munich | 23 June 2016 | Grob, Mark |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

**EP 3 193 282 A1**

## ANNEX TO THE EUROPEAN SEARCH REPORT
## ON EUROPEAN PATENT APPLICATION NO.

EP 16 15 0859

23-06-2016

| Patent document cited in search report | | | Publication date | Patent family member(s) | | | Publication date |
|---|---|---|---|---|---|---|---|
| EP | 1031939 | A1 | 30-08-2000 | CN | 1278936 | A | 03-01-2001 |
| | | | | DE | 69831592 | D1 | 20-10-2005 |
| | | | | DE | 69831592 | T2 | 22-06-2006 |
| | | | | EP | 1031939 | A1 | 30-08-2000 |
| | | | | US | 6378774 | B1 | 30-04-2002 |
| | | | | WO | 9926195 | A1 | 27-05-1999 |
| US | 2015257266 | A1 | 10-09-2015 | JP | 5621951 | B1 | 12-11-2014 |
| | | | | US | 2015257266 | A1 | 10-09-2015 |
| | | | | WO | 2014097836 | A1 | 26-06-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. R. LOPEZ.** Review of Narrowband Impedance-Matching Limitations. *IEEE Antennas and Propagations Magazine,* August 2004, vol. 46, 88-90

- **R. M. FANO.** Theoretical Limitations on the Broadband Matching of Arbitrary Impedances. *Journal of the Franklin Institute,* January 1950, vol. 249